# EUROPÄISCHE PATENTSCHRIFT

(11) **EP 2 121 282 B1**
(45) Veröffentlichungstag und Bekanntmachung des Hinweises auf die Patenterteilung: **10.10.2018**
(21) Anmeldenummer: 07785599.7
(22) Anmeldetag: 06.07.2007
(51) Int. Cl.: B29C 47/68, B29C 47/92

(54) **VORRICHTUNG ZUM FILTRIEREN EINES FLUIDS, INSBESONDERE FÜR KUNSTSTOFFVERARBEITENDE ANLAGEN**
DEVICE FOR FILTERING A FLUID, PARTICULARLY FOR PLASTIC PROCESSING PLANTS
DISPOSITIF POUR LE FILTRAGE D'UN FLUIDE, EN PARTICULIER POUR DES INSTALLATIONS DE TRANSFORMATION DES MATIÈRES PLASTIQUES

(30) Priorität: 30.08.2006 DE 102006040703
(43) Veröffentlichungstag der Anmeldung: 25.11.2009
(73) Patentinhaber: Nordson Holdings S.à r.l. & Co. KG, 40699 Erkrath (DE)
(72) Erfinder: WÖSTMANN, Stefan, 48336 Sassenberg (DE)
(74) Vertreter: Eisenführ Speiser
(86) Internationale Anmeldenummer: PCT/DE2007/001201
(87) Internationale Veröffentlichungsnummer: WO 2008/025313

(56) Entgegenhaltungen:
- EP-A- 1 208 956
- DE-A1- 10 301 536
- DE-B3-102004 036 597
- US-A1- 2003 178 740

## Beschreibung

Die Erfindung bezieht sich auf eine Vorrichtung zum Filtrieren eines Fluids, insbesondere eines verflüssigten Kunststoffes mit einem Gehäuse eines Siebwechslers mit einem Zuführkanal und einem Abfuhrkanal, wobei im Strömungsweg des Fluids in einem quer zur Strömungsrichtung verschieblich gelagerten Siebträger wenigstens je ein Filterelement in einem entsprechenden Siebraum angeordnet und mit dem Zufuhrkanal und dem Abfuhrkanal in Verbindung bringbar ist gemäß dem Oberbegriff des Anspruches 1 und 2.

Aus der EP 0 554 237 A ist eine Filtervorrichtung für verunreinigte Fluide und ein Verfahren zu ihrem Betrieb bekannt geworden. Bei dieser bekannten Einrichtung ist zumindest einem Abströmkanal zumindest ein Vorratsraum zur Aufnahme einer beim Rückspülvorgang benötigten Fluidmenge angeschlossen. In dem Vorratsraum ist ein Kolben zur Verdrängung von Fluid aus dem Vorratsraum geführt, wobei dieser Vorratsraum beim Rückspülvorgang sowohl mit der Abströmseite des rückzuspülenden Siebnestes als auch mit dem Abströmkanal in freier Fließverbindung für das gereinigte Fluid steht. Der Vorrats- oder Speicherraum wird während der normalen Produktion mit Kunststoffmaterial gefüllt und steht im Fall der Rückspülung nicht nur mit dem rückzuspülenden Siebnest in Verbindung, sondern der in dem Speicherraum geführte Verdrängerkolben wirkt auch auf den normalen Produktionskanal ein, der von dem dann in Betrieb befindlichen Sieb zum Arbeitsgerät oder Werkzeug führt. Hier tritt die Schwierigkeit auf, dass bei der Mündung des Speicherraumes in den Produktionskanal die aus dem Speicherraum auszudrückende Kunststoffmasse teilweise entgegen der Fließrichtung im Produktionskanal fließen muss. Ein Teil des aus dem Speicheraum ausgedrückten Kunststoffmaterials fließt aber auch in Richtung des Produktionskanals, d. h. in Richtung zum Werkzeug hin. Hier treten also Schwierigkeiten auf, die in der Praxis schwer zu beherrschen sind.

Die in dieser Literatursteller angesprochene Druckkonstante ist nicht erreichbar, da es sich hier um kommunizierende Röhren, d. h. in Verbindung befindliche Druckräume handelt. Weiterhin ist der Widerstand zur Rückspülöffnung hin wesentlich geringer als zum Werkzeug hin, so dass am Werkzeug selbst eine erheblicher Druckabfall auftreten muss.

In der WO 98/47688 wird eine Siebeinrichtung für verflüssigten Kunststoff beschrieben, bei welcher ebenfalls ein Verdrängerkolben gereinigte Kunststoffmasse durch das Sieb zurückdrückt, um damit den Rückspülvorgang durchzuführen. Diese Anordnung hat den Nachteil, das Ventileinrichtungen vorhanden sein müssen, die während der normalen Arbeitsweise, also während der Produktionsphase, den Rückfließkanal verschließen. Solche Ventileinrichtungen sind bei Verarbeitung von fluidem thermoplastischem Kunststoffmaterial unerwünscht, da sie zu Verstopfungen führen können und selbstverständlich zusätzlich beheizt sein müssen. Auch kann eine Zersetzung des Kunststoffmaterials in diesem Bereich erfolgen, da die Ventileinrichtung niemals ganz sauber gereinigt werden kann.

Die bekannte Einrichtung hat weiterhin den Nachteil, dass zum Auswechseln der Siebe die gesamte Ventileinrichtung abgenommen werden muss, also die bekannte Vorrichtung ist relativ aufwendig gestaltet.

Die Nachteile dieser Einrichtungen werden durch die Vorrichtung gemäß der DE 10 2004 036 597 B3 vermieden. In dieser Literaturstelle wird eine relativ aufwendige Einrichtung erläutert, die zwar zu dem gewünschten Ziel führt, nämlich eine Vorrichtung vorzuschlagen, bei der der Rückspüleffekt wesentlich verbessert werden kann, zugleich aber auch der Masseverlust im Hauptstrom zum Zeitpunkt des Rückspülens vermieden wird und der im Kanal angeordnete Verdrängerkolben stets von Material umspült wird.

Die DE 103 01 536 A1 offenbart für eine entsprechende Filtereinheit einen im Abführkanal befindlichen Durchflusssensor. In Abhängigkeit vom gemessenen Durchfluss wird ein im Zuführkanal befindlicher Druckerzeuger, nämlich eine Pumpe oder eine Drossel, angesteuert.

Aus der EP 1 208 956 A1 ist es bekannt, die Ansteuerung eines Extruders in Abhängigkeit von einem nach einem üblichen Siebwechsler gemessenen Druck durchzuführen.
Der Erfindung liegt die Aufgabe zugrunde, eine Vorrichtung vorzuschlagen, mit der im Bereich des Abfuhrkanals eine Druckkonstante und eine Durchflussmengenkonstante erreichbar ist.
Diese der Erfindung zugrundeliegende Aufgabe wird durch die Lehre der Ansprüche 1 und 2 gelöst.

Eine konkrete Vorrichtung wird vorgeschlagen, die im Vergleich zu der in der DE 10 2004 036 597 B3 beschriebenen Einrichtung einfacher ausgebildet ist, ist, und nicht nur die Rückspülwirkung beschleunigt und verbessert. Bei dieser Anordnung wird in dem Zuführkanal ein Speicherraum mit einem darin angeordneten Verdrängerkolben angeordnet. Zwischen der Mündung dieses Speicherraumes mit dem Verdrängerkolben und dem eigentlichen Siebwechsler ist dann ein Druckerzeuger vorgesehen, so daß bei einem Ansprechen des am Abfuhrkanal vorgesehenen Sensors sowohl der Verdrängerkolben betätigt wird und damit Material aus dem Speicherraum in den Zuführkanal abgibt und gleichzeitig der Druckerzeuger dieses Zusatzmaterial dadurch beherrscht, daß er entsprechend schneller umlaufend angetrieben wird.

Im normalen Betrieb läuft der Druckerzeuger, beispielsweise eine Zahnradpumpe, mit einer entsprechenden Leistung und sorgt dafür, dass der mögliche Druckabfall, der dadurch entstehen kann, dass der Speicherraum für den Verdrängerkolben mit Material gefüllt wird, sich nicht auf den Siebwechsler und die daran angeschlossenen Werkzeuge auswirken kann. Erfolgt nunmehr durch den Vorgang des Rückspülens oder beispielsweise durch die Entlüftung des Siebwechslers ein Druckabfall an der Austrittsseite des Druckerzeugers, bedingt durch die Materialentnahme aus dem Prozeß, wird der Druckerzeuger zusätzlich tätig und gleichzeitig arbeitet der Verdrängerkolben und führt das im Speicherraum befindliche Kunststoffmaterial in den Zuführkanal ein, so dass der durch die erhöhte Leistung des Druckerzeugers im Zuführkanal auf der Ansaugseite des Druckerzeugers entstehende Druckabfall durch das durch den Verdrängerkolben aus dem Speicherraum ausgepresste und in den Zuführkanal geführte Gut ausgeglichen wird.

Es wird weiter vorgeschlagen, den Druckerzeuger im Zuführkanal in Strömungsrichtung des Fluids vor dem mit einem Verdrängerkolben ausgerüsteten Speicherraum bzw. der Mündung des Speicherraumes anzuordnen, wobei bei Füllung des Speicherraumes der Druckerzeuger mit höherer Leistung arbeitet.

Mit der Erfindung werden Vorrichtungen beansprucht, bei denen im Abfuhrkanal ein Sensor angeordnet ist, der hier den Druck und die Durchflussmenge des Materials kontrolliert und mißt. Diese Werte steuern einerseits einen Druckerzeuger, andererseits den Betrieb der Zufuhrvorrichtung, beispielsweise einen Doppelschneckenextruder. Fällt der Durchflussmengenwert und/oder der Druckwert wird automatisch die Leistung der Zuführeinrichtung erhöht, d. h. es wird mehr Material dort zugeführt und gleichzeitig der normalerweise mit einer konstanten Um-drehungszahl umlaufende Druckerzeuger mit einer höheren Umdrehungszahl angetrieben, so daß der durch eine Materialentnahme aus dem Prozeß hier durch einen Rückspülvorgang oder den Entlüftungsvorgang auftritt entstehende Druckabfall und Volumenabfall sensitiv ausgeglichen.

Mit anderen Worten ausgedrückt wird im Bereich des Abfuhrkanals eine Druckkonstanz und eine Durchflussmengenkonstanz erzielt.

Ausführungsbeispiele der Erfindung werden nachfolgend anhand der Zeichnungen erläutert. Die Zeichnungen zeigt dabei in
- Fig. 1: den Siebwechsler mit Druckerzeuger und Verdrängerkolbeneinrichtung in der Stellung des Verdrängerkolbens wenn der Speicherraum mit Kunststoffmaterial gefüllt ist, in
- Fig. 2: die Anordnung gemäß Fig. 1, wobei der Verdrängerkolben nunmehr das im Speicherraum befindliche Material ausgedrückt hat und in
- Fig. 3: die Anordnung derart, daß der Druckerzeuger in Strömungsrichtung des Fluids gesehen vor der Mündung des Speicherraumes angeordnet ist.

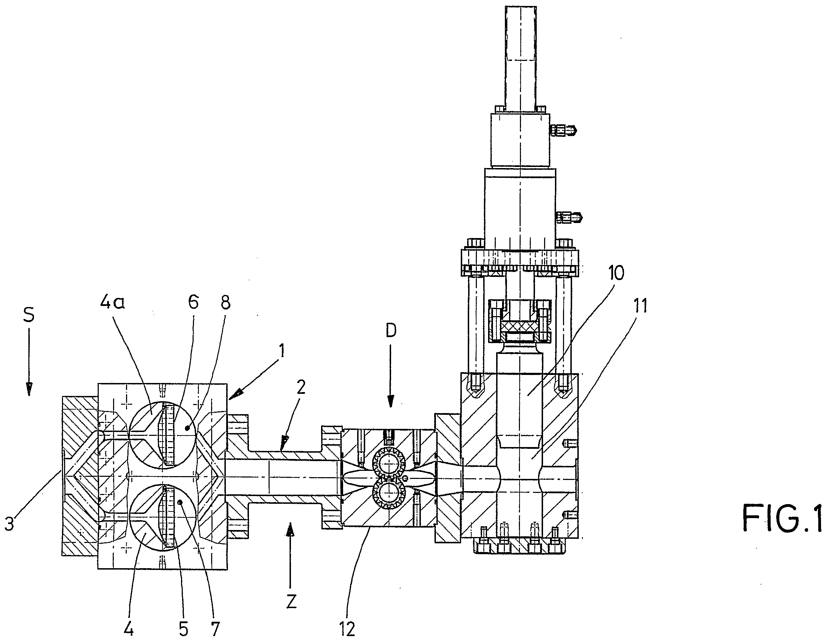

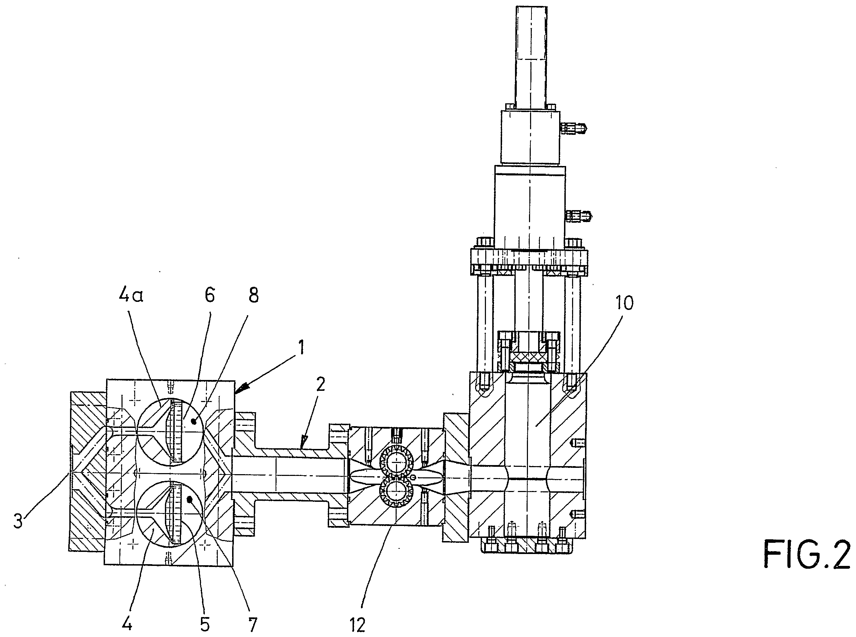

In den Figuren 1 und 2 ist ein Gehäuse 1 eines Siebwechslers dargestellt, dass mit einem Zuführkanal 2 und einem Abfuhrkanal 3 ausgerüstet ist. Innerhalb dieses Gehäuses 1 sind Siebträger 4 und 4a vorgesehen, die wenigstens je ein Filterelement 5, 6 in einem entsprechenden Siebraum 7, 8 aufnehmen, wobei diese Siebräume 7, 8 mit dem Zuführkanal 2 und die Abströmseite der Filterelemente 5, 6 mit dem Abfuhrkanal 3 in Verbindung steht.

In dem Zuführkanal 2 ist ein Druckerzeuger 12 angeordnet, der vorzugsweise als Zahnradpumpe ausgebildet ist und diesem Druckerzeuger 12 ist ein Schmelzespeicher vorgeschaltet, der im wesentlichen aus einem Verdrängerkolben 10 und einem Speicherraum 11 besteht.

Ist, wie dies in Fig. 1 dargestellt ist, der Verdrängerkolben 10 in seiner angehobenen Stellung, steht der Speicherraum 11 mit dem Zuführkanal 2 in Verbindung und in dem Zuführkanal 2 fließendes Kunststoffmaterial tritt in den Speicherraum 11 bis zu dessen Füllung ein.

Im Bereich des Abfuhrkanales 3 ist ein Sensor S angeordnet, der den Druck und die Durchflussmenge des hier fließenden Materials überwacht. Im Bereich des Zuführkanals 2 ist eine Steuerung Z vorgesehen, mit der der Füllungsgrad des Zuführkanals 2 kontrolliert wird und im Bereich des Druckerzeugers 12 ist eine Steuereinrichtung D vorgesehen, die auf die Leistung des Druckerzeugers 12 einwirkt.

Eine negative Änderung im Bereich des Sensors S bewirkt eine Erhöhung des Füllungsgrades der Zuführeinrichtung 2, indem beispielsweise der Kolben 10 betätigt wird und gleichzeitig der Druckerzeuger 12 mit höherer Leistung umläuft.

Erfolgt nunmehr beim Rückspülen bzw. beim Entlüften des Siebwechslers ein Druckabfall in dem Abfuhrkanal 3 und damit ein Druckabfall bezüglich der im Abfuhrkanal 3 angeordneten Werkzeuge, wird die Leistung des Druckerzeugers 12 entsprechend erhöht und gleichzeitig wird durch den Verdrängerkolben 10 gespeichertes Kunststoffmaterial aus dem Speicherraum 11 in den Zuführkanal 2 zugeführt, wobei durch die Tätigkeit des Druckerzeugers 12 nunmehr verhindert wird, dass sich der durch den Verdrängerkolben 10 ausgeübte Druck auch in dem Zuführkanal 2 bei der Darstellung in den Fig. 1 und 2 nach rechts auswirken kann, also entgegen der normalen Strömung des im Zuführkanal 2 fließenden Materials.

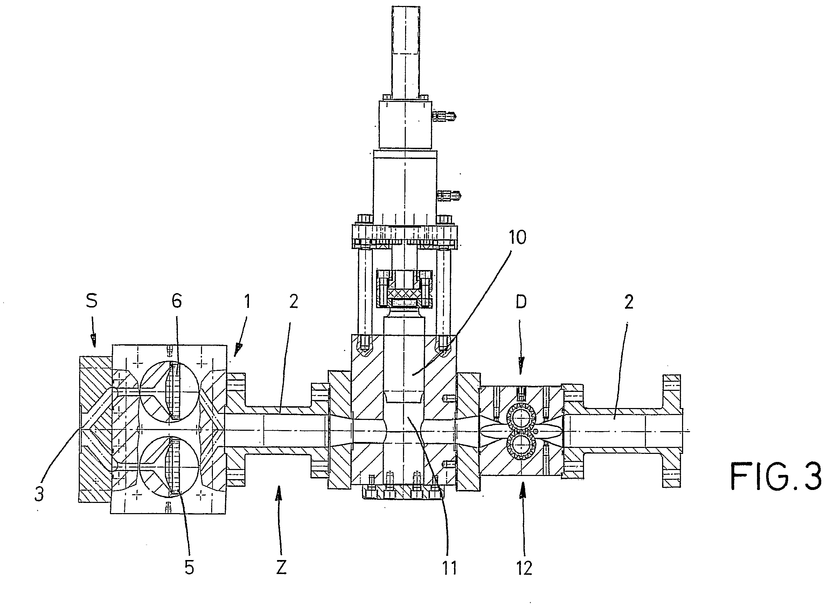

Bei dem in Fig. 3 dargestellten Ausführungsbeispiel ist ebenfalls ein Gehäuse 1 eines Siebwechslers dargestellt, das mit einem Zuführkanal 2 und einem Abfuhrkanal 3 ausgerüstet ist. Innerhalb dieses Gehäuses sind Filterelemente 5 und 6 angeordnet. In dem Zuführkanal 2 ist ein Druckerzeuger 12 vorgesehen, der vorzugsweise als Zahnradpumpe ausgebildet ist und diesem Druckerzeuger 12 ist ein Schmelzspeicher nachgeschaltet, der im wesentlichen aus einem Verdrängerkolben 10 und einem Speicherraum 11 besteht.

Ist, wie dies in Fig. 3 dargestellt ist, der Verdrängerkolben 10 in seiner angehobenen Stellung, steht der Speicherraum 11 mit dem Zuführkanal 2 in Verbindung und in dem Zuführkanal 2 fließendes Kunststoffmaterial tritt in den Speicherraum 11 bis zu dessen Füllung ein.

Auch hier ist im Bereich des Abfuhrkanals 3 ein Sensor S angeordnet, der den Druck und die Durchflussmenge des hier fließenden Materials überwacht. Im Bereich des Zuführkanals 2 ist eine Steuerung Z vorgesehen, mit der der Füllungsgrad der Zuführeinrichtung 2 kontrolliert wird und im Bereich des Druckerzeugers 12 ist eine Steuereinrichtung D vorgesehen, die auf die Leistung des Druckerzeugers einwirkt.

Bei dieser Anordnung arbeitet bei Füllung des Speicherraumes 11 der Druckerzeuger 12 mit höherer Leistung.

## Patentansprüche

1. Vorrichtung zum Filtrieren eines Fluids, insbesondere eines verflüssigten Kunststoffes mit einem Gehäuse (1) eines
Siebwechslers, mit einem Zuführkanal (2) und einem Abfuhrkanal (3), wobei im Strömungsweg des Fluids in einem quer zur Strömungsrichtung verschieblich gelagerten Siebträger (4, 4a) wenigstens je ein Filterelement (5, 6) in einem entsprechenden Siebraum (7, 8) angeordnet und mit
dem Zuführkanal (2) und dem Abfuhrkanal (3) in Verbindung bringbar ist, **dadurch gekennzeichnet, dass** ein mit einem Verdrängerkolben (10) ausgerüsteter Speicherraum (11) in den Zuführkanal (2) des Siebträgers (4, 4a) mündet und ein Druckerzeuger (12) zwischen Speicherraum (11) und Gehäuse (1) des Siebwechslers angeordnet ist, ein Druck und/oder Durchflussmenge ermittelnder Sensor (S) im Bereich des Abfuhrkanales (3), eine Steuerung (Z) für den Füllungsgrad des Zuführkanals (2) und eine Steuereinrichtung (D) für den im Zuführkanal (2) angeordneten Druckerzeuger (12) vorgesehen ist, wobei der Sensor (S) auf die Steuerung (Z) für den Füllungsgrad und die Steuereinrichtung (D) für den Druckerzeuger einwirkt, und wobei bei einem Abfall des Drucks oder der Durchflussmenge im Bereich des Abführkanals (3) oder bei Materialentnahme aus dem Prozeß durch ein Rückspülverfahren oder ein Entlüftungsverfahren der Verdrängerkolben (10) wirksam wird und der Druckerzeuger (12) mit höherer Leistung arbeitet.

2. Vorrichtung zum Filtrieren eines Fluids, insbesondere eines verflüssigten Kunststoffes mit einem Gehäuse (1) eines Siebwechslers, mit einem Zuführkanal (2) und einem Abfuhrkanal (3), wobei im Strömungsweg des Fluids in einem quer zur Strömungsrichtung verschieblich gelagerten Sieb- träger (4, 4a) wenigstens je ein Filterelement (5, 6) in einem entsprechenden Siebraum (7, 8) angeordnet und mit dem Zuführkanal (2) und dem Abfuhrkanal (3) in Verbindung bringbar ist, **dadurch gekennzeichnet, dass** ein mit einem Verdrängerkolben (10) ausgerüsteter Speicherraum (11) in den Zuführkanal (2) des Siebträgers (4, 4a) mündet und ein Druckerzeuger (12) im Zuführkanal (2) in Strömungsrichtung des Fluids vor dem Speicherraum (11) angeordnet ist, ein Druck und/oder Durchflussmenge ermittelnder Sensor (S) im Bereich des Abfuhrkanales (3), eine Steuerung (Z) für den Füllungsgrad des Zuführkanals (2) und eine Steuereinrichtung (D) für den im Zuführkanal (2) angeordneten Druckerzeuger (12) vorgesehen ist, wobei der Sensor (S) auf die Steuerung (Z) für den Füllungsgrad und die Steuereinrichtung (D) für den Druckerzeuger einwirkt, und
wobei bei Füllung des Speicherraumes (11) der Druckerzeuger (12) mit höherer Leistung arbeitet.

3. Vorrichtung nach Anspruch 1 oder 2, **dadurch gekennzeichnet, dass** der Druckerzeuger (12) als Zahnradpumpe ausgebildet ist.

## Claims

1. A device for filtering a liquid, in particular a liquefied plastic, comprising a housing (1) of a screen changer, said housing comprising a feed channel (2) and a discharge channel (3), wherein, in the flow path of the fluid, at least one filter element (5, 6) is arranged in each corresponding screen chamber (7, 8) in a screen carrier (4, 4a) mounted slidably transversely to the direction of fluid flow and is connectable to the feed channel (2) and the discharge channel (3), **characterized in that** a storage space (11) fitted with a displacement piston (10) opens into the feed channel (2) of the screen carrier (4, 4a) and a pressure generator (12) is arranged between the storage space (11) and the housing (1) of the screen changer, a sensor (S) detecting a pressure and/or a flow volume is provided in the region of the discharge channel (3), a control means (Z) is provided for the filling level of the feed channel (2) and a control device (D) is provided for the pressure generator (12) arranged in the feed channel (2), wherein the sensor (S) acts on the control means (Z) for the filling level and on the control device (D) for the pressure generator, and wherein the displacing piston (10) comes into operation and the pressure generator (12) operates at a higher power level when there is a drop in pressure or in the flow volume in the region of the discharge channel (3), or when material is removed from the process by backflushing or venting.

2. A device for filtering a liquid, in particular a liquefied plastic, comprising a housing (1) of a screen changer, said housing comprising a feed channel (2) and a discharge channel (3), wherein, in the flow path of the fluid, at least one filter element (5, 6) is arranged in each corresponding screen chamber (7, 8) in a screen carrier (4, 4a) mounted slidably transversely to the direction of fluid flow and is connectable to the feed channel (2) and the discharge channel (3), **characterized in that** a storage space (11) fitted with a displacement piston (10) opens into the feed channel (2) of the screen carrier (4, 4a) and a pressure generator (12) is arranged in the feed channel (2) in the flow path of the fluid upstream from the storage space (11), a sensor (S) detecting a pressure and/or a flow volume is provided in the region of the discharge channel (3), a control means (Z) is provided for the filling level of the feed channel (2) and a control device (D) is provided for the pressure generator (12) arranged in the feed channel (2), wherein the sensor (S) acts on the control means (Z) for the filling level and on the control device (D) for the pressure generator, and wherein the pressure generator (12) operates at a higher power level when the storage space (11) is being filled.

3. The device according to claim 1 or 2, **characterized in that** the pressure generator (12) is provided in the form of a gear pump.

## Revendications

1. Dispositif pour le filtrage d'un fluide, en particulier d'une matière plastique liquéfiée avec un carter (1) d'un changeur de tamis, avec un canal d'alimentation (2) et un canal d'évacuation (3), dans lequel au moins respectivement un élément filtrant (5, 6) est agencé dans un espace de tamisage correspondant (7, 8) dans le trajet d'écoulement du fluide dans un porte-tamis (4, 4a) logé de manière mobile transversalement à la direction d'écoulement et peut être mis en relation avec le canal d'alimentation (2) et le canal d'évacuation (3), **caractérisé en ce qu'**un espace de stockage (11) équipé d'un piston déplaceur (10) débouche dans le canal d'alimentation (2) du porte-tamis (4, 4a) et un générateur de pression (12) est agencé entre l'espace de stockage (11) et le carter (1) du changeur de tamis, un capteur (S) détectant une pression et/ou un débit est prévu dans la zone du canal d'évacuation (3), une commande (Z) est prévue pour le degré de remplissage du canal d'alimentation (2) et un dispositif de commande (D) est prévu pour le générateur de pression (12) agencé dans le canal d'alimentation (2), dans lequel le capteur (S) agit sur la commande (Z) pour le degré de remplissage et le dispositif de commande (D) pour le générateur de pression, et dans lequel, dans le cas d'une chute de la pression ou du débit dans la zone du canal d'évacuation (3) ou en cas de prélèvement de matériau du processus par un procédé de rétrolavage ou un procédé d'aération, le piston déplaceur (10) devient actif et le générateur de pression (12) fonctionne avec une puissance plus élevée.

2. Dispositif pour le filtrage d'un fluide, en particulier d'une matière plastique liquéfiée avec un carter (1) d'un changeur de tamis, avec un canal d'alimentation (2) et un canal d'évacuation (3), dans lequel au moins respectivement un élément filtrant (5, 6) est agencé dans un espace de tamisage correspondant (7, 8) dans le trajet d'écoulement du fluide dans un porte-tamis (4, 4a) logé de manière mobile transversalement à la direction d'écoulement et peut être mis en relation avec le canal d'alimentation (2) et le canal d'évacuation (3), **caractérisé en ce qu'**un espace de stockage (11) équipé d'un piston déplaceur (10) débouche dans le canal d'alimentation (2) du porte-tamis (4, 4a) et un générateur de pression (12) est agencé dans le canal d'alimentation (2) dans la direction d'écoulement du fluide avant l'espace de stockage (11), un capteur (S) détectant une pression et/ou un débit est prévu dans la zone du canal d'évacuation (3), une commande (Z) est prévue pour le degré de remplissage du canal d'alimentation (2) et un dispositif de commande (D) est prévu pour le générateur de pression (12) agencé dans le canal d'alimentation (2), dans lequel le capteur (S) agit sur la commande (Z) pour le degré de remplissage et le dispositif de commande (D) pour le générateur de pression, et
dans lequel, lors du remplissage de l'espace de stockage (11), le générateur de pression (12) fonctionne avec une puissance plus élevée.

3. Dispositif selon la revendication 1 ou 2, **caractérisé en ce que** le générateur de pression (12) est réalisé en tant que pompe à engrenages.
